# EUROPEAN PATENT SPECIFICATION

(11) **EP 1 584 659 B1**
(45) Date of publication and mention of the grant of the patent: **09.07.2008**
(21) Application number: 05009144.6
(22) Date of filing: 21.02.2000
(51) Int. Cl.: C08L 83/04, C09J 183/04, C08K 3/00

(54) **Curable silicone composition**
Vernetzbare Silikonzusammensetzung
Composition de silicone réticulable

(43) Date of publication of application: 12.10.2005
(62) Divisional of application: 00103636.7
(73) Proprietor: Dow Corning Toray Co., Ltd., Tokyo (JP)
(72) Inventor: Nakata, Toshiki, Ichihara-shi, Chiba Prefecture (JP); Onishi, Masayuki, Ichihara-shi, Chiba Prefecture (JP)
(74) Representative: Spott, Gottfried

(56) References cited:
- EP-A- 0 618 257
- EP-A- 0 728 825
- EP-A- 0 841 385
- EP-A- 0 985 710

## Description

### FIELD OF THE INVENTION

The present invention relates to a curable silicone composition, and more specifically a curable silicone composition which can form a cured product with superior matte properties as a result of being cured by a hydrosilylation reaction.

### BACKGROUND OF THE INVENTION

Curable silicone compositions which are cured by a hydrosilylation reaction and a condensation reaction can be cured by heating or by means of moisture in the air. Accordingly, such compositions are suitable for use as fillers or adhesive agents such as sealing agents, etc., used in electrical and electronic devices, etc.

However, in the case of such curable silicone compositions, the cured product obtained by curing has surface luster; as a result, in cases where this cured product is used as a filler or adhesive agent for the waterproofing of an LED (light-emitting diode) display device, etc., the cured product reflects light from the LEDs and light from the outside, so that the visual recognition characteristics are poor.

Accordingly, attempts have been made to deluster the cured product obtained in such cases by mixing an inorganic filler with the curable silicone composition; however, it has not been possible to endow such compositions with sufficient matte properties. Furthermore, large quantities of filler must be used in order to endow such compositions with matte properties; however, if such large quantities of filler are used, the fluidity of the curable silicone composition that is obtained drops, so that the handling and working characteristics of the composition deteriorate.

EP 0 841 385 A2 discloses a dual-cure silicone adhesive composition extrudable and flowable at room temperature in the absence of a solvent.

EP 0 618 257 A1 discloses a method for producing a surface of a cured silicone elastomer with a hardened protective coating.

EP 0 728 825 A1 discloses adhesive silicone compositions having adhesion to organic resins and metals.

US 5 125 998 discloses a process for producing organopolysiloxane compositions which do not cure at room temperature for a certain period of time, but which cure rapidly when heated and/or irradiated.

US 3 936 581 discloses hardenable compositions based on organopolysiloxanes.

The object of the present invention is to provide a curable silicone composition which can form a cured product with superior matte properties as a result of being cured by a hydrosilylation reaction.

### DETAILED DESCRIPTION OF THE INVENTION

The present invention relates to a curable silicone composition which is cured by a hydrosilylation reaction, and which is characterized by the fact that the composition contains an air-oxidation-curable unsaturated compound.

This unsaturated compound is a component which is used to endow the cured product obtained by curing the present composition with sufficient matte properties. Such unsaturated compounds are cured by the oxidation of the unsaturated bonds in the molecule by oxygen contained in the air. The unsaturated compound is selected from the list given in claim 1.

In the present invention, the content of the abovementioned air-oxidation-curable unsaturated compound is in the range of 0.01 to 50 parts by weight per 100 parts by weight of the silicone component in the present composition; a content in the range of 0.1 to 20 parts by weight is more desirable, and a content in the range of 0.1 to 10 parts by weight is especially desirable. Note that if the content of this unsaturated compound is less than the lower limit of the abovementioned range, there tends to be an insufficient endowment of the resulting cured silicone product with matte properties. On the other hand, if the content exceeds the upper limit of the abovementioned range, the mechanical characteristics of the resulting cured silicone product tend to deteriorate.

The curable silicone composition is cured by a hydrosilylation reaction.

Furthermore, optional components which may be added in order to improve the handling and working characteristics of abovementioned composition include acetylene type compounds such as 3-methyl-1-butyn-3-ol, 3,5-dimethyol-1-hexyn-3-ol and 3-phenyl-1-butyn-3-ol, etc., en-yne compounds such as 3-methyl-3-penten-1-yne and 3,5-dimethyl-3-hexen-1-yne, etc.; cylcoalkenylsiloxanes such as 1,3,5,7-tetramethyl-1,3,5,7-tetravinyleyclotetrasiloxane and 1,3,5,7-tetramethyl-1,3,5,7-tetrahexenylcyclotetrasiloxane, etc.; triazole compounds such as benzotriazole, etc.; and other hydrosilylation reaction inhibiting agents such as phosphine compounds, mercaptan compounds and hdyrazine compounds, etc. The content of such inhibiting agents varies according to the working and handling conditions and the curing conditions; generally, however, it is desirable that such inhibiting agents be used in amounts ranging from 10 to 1,000 ppm (in weight units) relative to the silicone component in the abovementioned composition.

Furthermore, the abovementioned composition may also contain as optional elements inorganic fillers such as fumed silica, finely powdered wet process silica, finely powdered quartz, finely powdered calcium carbonate, finely powdered magnesium carbonate, iron oxide, finely powdered titanium dioxide, finely powdered diatomaceous earth, finely powdered aluminum oxide, finely powdered aluminum hydroxide, finely powdered zinc oxide and finely powdered zinc carbonate, etc.; hydrophobic inorganic fillers obtained by surface-treating the abovementioned inorganic fillers with an organoalkoxysilane such as methyltrimethoxysilane, etc., an organohalosilane such as trimethylchlorosilane, etc., an organosilazane such as hexamethyldisilazane, etc., or a siloxane oligomer such as a dimethylsiloxane oligomer in which both ends of the molecular chains are closed by hydroxy groups, a methylphenylsiloxane oligomer in which both ends of the molecular chains are closed by hydroxy groups, or a methylvinylsiloxane oligomer in which both ends of the molecular chains are closed by hydroxy groups, etc.; organic solvents such as toluene, xylene, acetone, methyl ethyl ketone, methyl isobutyl ketone; hexane and heptane, etc.; won-cross-linkable organopolysiloxanes such as polydimethylsiloxanes in which both ends of the molecular chains are closed by trimethylsiloxy groups or polymethylphenylsiloxanes in which both ends of the molecular chains are closed by trimethylsiloxy groups; pigments such as carbon black or red oxide, etc.; and other additives such as flame-retarding agents, heat resistance improving agents, sensitizers, polymerization inhibitors, internal mold release agents, plasticizers, thixotropy-imparting agents, adhesion promoters and anti-mold agents, etc.

The curable silicone composition of the present invention can form a cured product with superior matte properties when cured by means of a hydrosilylation reaction and condensation reaction. Accordingly, this composition can be appropriately used as a filler or adhesive agent in display devices such as LED display devices, etc.

### DESCRIPTION OF THE PREFERRED EMBODIMENTS

The present invention relates to a curable silicone composition which comprises:
(A) 100 parts by weight of an organopolysiloxane of the formula

   R¹ₙSiO_{(4-n)/2}

   wherein, R¹ is a substituted or unsubstituted monovalent hydrocarbon group which may be the same or different, and n is a positive number from 1.6 to 2.4; wherein the organopolysiloxane of (A) has at least two aliphatic unsaturated groups per molecule;
(B) 0.01 to 50 parts by weight of an organic compound which has air-oxidation-curable unsaturated groups selected from linolenic acid, linolic acid, tung oil, linseed oil, soybean oil, methyl linolenate, methyl linolate, butadiene, pentadienes, hexadienes, and polymers thereof; and
(C) a curing agent including an organohydrido-polysiloxane and a platinum type catalyst (used in an amount effective to cure the abovementioned component (A)).

Component (A) is an organopolysiloxane which can be expressed by the following formula:

R¹ₙSiO_{(4-n)/2}

In the above formula, R¹ indicates substituted or unsubstituted monovalent hydrocarbon groups, which may be the same or different. Examples of such groups include alkyl groups such as methyl groups, ethyl groups, propyl groups and butyl groups, etc.; cycloalkyl groups such as cyclohexyl groups, etc.; alkenyl groups such as vinyl groups, allyl groups, butenyl groups and hexenyl groups, etc.; aryl groups such as phenyl groups and tolyl groups, etc.; and halogenated alkyl groups such as chloromethyl groups and 3,3,3-trifluoropropyl groups, etc. It is necessary that at least two of the groups bonded to the silicon atoms in component (A) be the abovementioned alkenyl groups. Furthermore, n in the above formula is a positive numberin the range of 1.6 to 2.4. This means that the molecular structure of the organopolysiloxane of the present component is substantially linear. However, a portion of the molecular structure may be branched or have a branch-form configuration; furthermore, an organopolysiloxane whose molecular structure is branched or has a branch-form configuration may be used in combination with the abovementioned organopolysiloxane.

The organic compound with air-oxidation-curable unsaturated groups comprising component (B) is used in order to endow the cured product of the present composition with sufficient matte properties. This component is cured by a reaction of the unsaturated groups in the molecule caused by oxygen contained in the air.

The amount of component (B) that is added is an amount in the range of 0.0 1 to 50 parts by weight, preferably 0.1 to 20 parts by weight, and even more preferably 0.1 to 10 parts by weight, per 100 parts by weight of the abovementioned component (A). Note that if the amount of component (B) that is added is less than the lower limit of the abovementioned range, the cured product of the curable silicone composition obtained cannot be endowed with sufficient matte properties; on the other hand, if the amount that is added exceeds the upper limit of the abovementioned range, the mechanical characteristics of the cured product of the curable silicone composition obtained will show deterioration.

Component (C) of the present invention includes a combination of an organohydridopolysiloxane and a platinum type catalyst.

Note that organohydridopolysiloxanes are polysiloxanes that have at least two hydrogen atoms bonded to silicon atoms in each molecule. The molecular structure of the organohydridopolysiloxane used may be linear, branched or cyclic. Examples of such organohydridopolysiloxanes include dimethylpolysiloxanes in which both ends of the molecular chains are closed by dimethylhydridosiloxy groups, dimethylsiloxane-methylhydridosiloxane copolymers in which both ends of the molecular chains are closed by dimethylhydridosiloxy groups, methylhydridopolysiloxanes in which both ends of the molecular chains are closed by trimethylsiloxy groups, cyclic methylhydridosiloxanes, cyclic dimethylsiloxane-methylhydridosiloxane copolymers, and copolymers consisting of siloxane units expressed by the formula (CH₃)₂HSiO_{1/2} and siloxane units expressed by the formula SiO_{4/2}.

It is desirable that the amount of such organohydridopolysiloxane added be an amount such that the concentration of hydrogen atoms bonded to silicon atoms in this component is 0.5 to 10 moles per mole of alkenyl groups in the abovementioned component (A).

Furthermore, examples of platinum catalysts which can be used include chloroplatinic acid, alcohol compounds of chloroplatinic acid, olefin complexes of platinum, alkenylsiloxane complexes of platinum and carbonyl complexes of platinum. It is desirable that the amount of platinum type catalyst added be an amount which is such that the amount of platinum metal in the present composition be in the range of 0.1 to 1,000 ppm (weight standard) relative to the organopolysiloxane of the abovementioned component (A). Furthermore, an amount in the range of 1 to 500 ppm is especially desirable.

As other optional components, the present composition may contain inorganic fillers such as fumed silica, precipitated silica, pulverized quartz, titanium oxide, iron oxide, calcium carbonate and magnesium carbonate, etc., pigments such as carbon black and iron oxide red, etc.; and other additives such as heat resistance improving agents, reaction controlling agents, mold release agents, plasticizers, sensitizers and polymerization inhibitors, etc.

There are no restrictions on the method used to manufacture the present composition; for example, a method in which component (A), component (B), component (C) and other optional components are uniformly mixed by means of a universally known kneading apparatus such as a double-roll apparatus, Banbury mixer, kneader mixer or planetary mixer, etc., may be used. Furthermore, there are no restrictions on the use of the present composition; since a delustered cured product can be formed, the present composition may be appropriately used for filling or adhesion in display devices such as LED's, etc.

### EXAMPLES

The curable silicone composition of the present invention will be described in greater detail in terms of working examples. Furthermore, the viscosity values given in the working examples are values measured at 25°C. Moreover, the degree of matte finish of the cured product was evaluated by measuring the luster of the cured product (measurement angle 60°).

100 parts by weight of an organopolysiloxane with a viscosity of 400 mPa - s consisting of 99 mol % dimethyl siloxane units and 1 mol % dimethylvinylsiloxane units, and 100 parts by weight of pulverized silica with a mean particle size of 5 µm, were uniformly mixed. Afterward, an isopropyl alcohol solution of chloroplatinic acid (the amount of chloroplatinic acid added was an amount which was such that the concentration of platinum metal was 0.001 wt % relative to the abovementioned dimethylpolysiloxane), 12 parts by weight of a dimethylpolysiloxane with a viscosity of 10 mPa - s in which both ends of the molecular chains were closed by dimethylhydridosiloxy groups, 1 part by weight of a dimethylsiloxane-methylhydridosiloxane copolymer (molar ratio of dimethylsiloxane units to methylhydridosiloxane units = 3: 5) with a viscosity of 5 mPa - s in which both ends of the molecular chains were closed by trimethylsiloxy groups, and 1.5 parts by weight of tung oil, were mixed, thus producing a curable silicone composition.

Next, this curable silicone composition was cured by being heated for 2 hours at 80°C, thus producing a rubber-form cured product. When the degree of luster of this cured product was measured after the cured product was allowed to stand for one week at room temperature, the luster value obtained was zero.

In contrast, a curable silicone composition was manufactured in the same manner as in the example above, except that no tung oil was added. When this composition was cured in the same manner as in the Working Example, and the degree of luster of the cured product was measured, the luster value obtained was 60.

The curable silicone composition of the present invention is characterized by the fact that this composition is capable of forming a cured product with superior matte properties when cured.

## Claims

1. A curable silicone composition which comprises:
(A) 100 parts by weight of an organopolysiloxane of the formula
R¹ₙSiO_{(4-n)/2}
wherein R¹ is a substituted or unsubstituted monovalent hydrocarbon group which may be the same or different, and n is a positive number from 1.6 to 2.4; wherein the organopolysiloxane of (A) has at least two aliphatic unsaturated groups per molecule ;
(B) 0.01 to 50 parts by weight of an organic compound which has air-oxidation-curable unsaturated groups selected from linolenic acid, linolic acid, tung oil, linseed oil, soybean oil, methyl linolenate, methyl linolate, butadiene, pentadienes, hexadienes, and polymers thereof; and
(C) a curing agent including an organohydrido-polysiloxane and a platinum type catalyst

2. Use of a curable silicone composition as recited in Claim 1 as a display device filler or adhesive.

## Patentansprüche

1. Härtbare Siliconzusammensetzung, umfassend
(A) 100 Gewichtsteile eines Organopolysiloxans der Formel
R¹ₙSiO_{(4-n)/2}
worin R¹ für eine substituierte oder unsubstituierte monovalente Kohlenwasserstoffgruppe steht, die gleich oder verschieden sein kann, und n für eine positive Zahl von 1,6 bis 2,4 steht, wobei das Organopolysiloxan von (A) wenigstens zwei aliphatische ungesättigte Gruppen pro Molekül enthält,
(B) 0,01 bis 50 Gewichtsteile einer organischen Verbindung, die durch Luftoxidation härtbare ungesättigte Gruppen verfügt, die ausgewählt sind aus Linolensäure, Linolsäure, Tungöl, Leinsamenöl, Sojabohnenöl, Methyllinolenat, Methyllinolat, Butadien, Pentadienen, Hexadienen und Polymeren hiervon, und
(C) einem Härtungsmittel unter Einschluss eines Organohydridopolysiloxans und eines PlatinKatalysators.

2. Verwendung einer härtbaren Siliconzusammensetzung nach Anspruch 1 als ein Füllstoff einer Anzeigevorrichtung oder Klebstoff.

## Revendications

1. Composition de silicone réticulable, qui comprend
(A) 100 parties en poids d'un organopolysiloxane de formule
R¹ₙSiO_{(4-n)/2}
dans laquelle chaque R¹ est un groupement hydrocarboné monovalent, substitué ou non substitué, qui peut être identique ou différent, et n est un nombre positif de 1,6 à 2,4, l'organopolysiloxane de (A) possédant au moins deux groupements aliphatiques insaturés par molécule;
(B) 0,01 à 50 parties en poids d'un composé organique qui possède un groupement insaturé réticulable par oxydation à l'air, choisi parmi: acide linolénique, acide linoléique, huile d'abrasin, huile de lin, huile de soja, linolénate de méthyle, linoléate de méthyle, butadiène, pentadiènes, hexadiènes et leurs polymères, et
(C) un agent de réticulation comprenant un organohydrido-polysiloxane et un catalyseur de type platine.

2. Utilisation d'une composition de silicone réticulable selon la revendication 1, comme charge ou adhésif d'un dispositif de visualisation
